Europäisches Patentamt

European Patent Office

Office européen des brevets

(19)

(11) **EP 1 047 917 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(21) Anmeldenummer: **99908804.0**

(22) Anmeldetag: **20.01.1999**

(51) Int Cl.$^7$: **G01B 11/02**, G01B 11/04

(86) Internationale Anmeldenummer:
**PCT/EP1999/000344**

(87) Internationale Veröffentlichungsnummer:
**WO 1999/037973 (29.07.1999 Gazette 1999/30)**

(54) **VERFAHREN UND VORRICHTUNG ZUR FASERLÄNGENMESSUNG**

METHOD AND DEVICE FOR MEASURING FIBRE LENGTH

PROCEDE ET DISPOSITIF POUR MESURER LA LONGUEUR DE FIBRES

(84) Benannte Vertragsstaaten:
**CH DE FR GR IT LI**

(30) Priorität: **22.01.1998 DE 19802315
31.12.1998 DE 19860864**

(43) Veröffentlichungstag der Anmeldung:
**02.11.2000 Patentblatt 2000/44**

(73) Patentinhaber: **MASCHINENFABRIK RIETER AG
8406 Winterthur (CH)**

(72) Erfinder: **KURATLE, Christoph
CH-8493 Saland (CH)**

(56) Entgegenhaltungen:
**EP-A- 0 764 477          WO-A-91/14169
WO-A-99/15877          US-A- 5 786 894**

**EP 1 047 917 B1**

**Beschreibung**

Zur Messung der Länge von Fasern sind verschiedene Verfahren und Vorrichtungen bekannt. Diese teilen sich hauptsächlich in zwei Kategorien auf, von denen die eine eine Einzelfasermessung ist und die andere eine Bündelmessung. Bei der Einzelfasermessung werden die als, insbesondere Faserband, vorliegenden Fasern, zum Beispiel das Faserband einer Karde, wieder vereinzelt. Dies geschieht durch ein Streckwerk oder eine Auflösewalze, kann aber auch pneumatisch oder auch manuell erfolgen. Die einzelnen Fasern werden anschließend entweder mit einem Maßstab manuell gemessen oder z.B. auch auf elektronischem Wege. Dabei passieren sie eine Lichtschranke mit deren Hilfe Signale erfaßt werden können, die zum Messen der Faserlänge dienen.

Bei der Bündelmessung werden ganze Faserbündel mechanisch eingespannt, wobei die Fasern nebeneinander zu liegen kommen. Die Fasern werden dann einem Liniensensor zugeführt. Der Liniensensor kann mechanisch, optisch oder zum Beispiel kapazitiv sein und es wird mit dessen Hilfe ein sogenanntes Stapeldiagramm erarbeitet, das als Maßstab für die Faserlänge herangezogen wird.

Diese Verfahren haben jedoch den Nachteil, daß während der Messung die Fasern nicht vollkommen ausgestreckt sind oder nicht exakt parallel zueinander liegen oder im ungünstigsten Falle beides. Dies führt zu Meßungenauigkeiten, weil dies von den bisher eingesetzten Verfahren zur Messung der Faserlänge nicht kompensiert wird. Außerdem besitzen die bekannten Vorrichtungen den Nachteil, daß sie teilweise nur schwer automatisiert werden können.

Aus der EP 0 764 477 A1 ist ein Verfahren und eine Vorrichtung zum Auswählen von Wurzelfrüchten bekannt, wozu diese aus zwei Richtungen optisch erfaßt werden. Dabei wird die Größe der Frucht bestimmt, um diese entsprechend zu sortieren. Für die Bestimmung der Länge von wesentlich kleineren Fasern ist das hier gezeigte Verfahren und die Vorrichtung nicht geeignet.

Ferner ist aus der WO99/158777 (wobei dieses Dokument unter Art. 54(3) EPÜ fällt) ein Verfahren zur Messung von Holzfasern in einer Suspension bekannt. Das Verfahren schlägt zur Vermessung der Fasern vor wenigstens ein Abbild zu erzeugen und daraus Breite und Länge der Faser zu bestimmen. Mit zunehmender Stauchung der Fasern weichen bei diesem Verfahren aber die ermittelten Längenmaße zunehmend von den tatsächlichen Längenmaßen ab.

Aufgabe der vorliegenden Anmeldung ist es, ein Verfahren und eine Vorrichtung zum Messen der Länge von Fasern vorzuschlagen, wobei die Nachteile des Standes der Technik überwunden werden und eine einfache und zumindest teilweise automatisierte und genaue Messung der Länge einzeiner Fasern möglich ist.

Diese Aufgabe wird erfindungsgemäß durch das Verfahren des Patentanspruchs 1 gelöst, sowie durch die Vorrichtung zur Durchführung dieses Verfahrens gemäß Anspruch 18.

Durch das optische Erfassen der Faser in zwei Projektionsebenen wird vorteilhaft erreicht, daß, gleichgültig in welcher Lage die Faser oder ob die Faser in gestrecktem Zustand vorliegt, ihre Länge optisch erfaßt und gemessen werden kann. Durch die zwei Projektionsebenen kann letztlich die wahre Länge der Faser dargestellt werden. Besonders vorteilhaft ist es, wenn die beiden Projektionsebenen im wesentlichen aufeinander senkrecht stehen. Dadurch wird erreicht, daß eine perfekte, projizierte Darstellung der Faser möglich wird, so daß die exakte Länge der Faser letztlich ermittelt werden kann, gleichgültig, wie sehr die Faser in ihrer Orientierung von einer idealen Geraden abweicht. Ein besonders einfaches Verfahren kann dadurch gestaltet werden, daß wenigstens eine Kamera zum Erfassen wenigstens der einen Projektion eine Zeilenkamera ist, die linienförmige Bilder liefert. Mehrere, in kurzer zeitlicher Abfolge gemachte Bilder bzw. Bildausschnitte der Projektionsebene, ergeben dann unter Berücksichtigung der Geschwindigkeit der Faser, die Projektion der Faser in der Ebene parallel zur Zeilenkamera.

Wird die Faser in ihrer Gesamtheit nur über einen kurzen Zeitraum optisch erfaßt, d.h. in beiden Projektionsebenen wird die exakte, momentane projizierte Länge der Faser abgebildet, kann vorteilhaft erreicht werden, daß Einflüsse, die durch die Geschwindigkeit der Faser entstehen praktisch vollständig eliminiert werden. Es wird dadurch erreicht, daß eine exakte optisch scharfe Abbildung der Faser stattfindet. Dazu wird vorteilhaft die Faser während eines zeitlich kurzen Zeitraumes beleuchtet, wobei dies vorteilhaft durch einen Lichtblitz erfolgt, der z.B. durch ein Stroboskop erzeugt wird.

Besonders vorteilhaft ist es dabei, den Lichtblitz dadurch zu steuern, daß die Faser von einem Sensor erfaßt wird und dieser Sensor den Lichtblitz steuert. Der Lichtblitz wird dann erzeugt, wenn sich die Faser in einer optimalen Position im Verhältnis zum Meßsystem befindet. Dazu ist der Sensor über eine Steuerleitung mit dem Lichtblitz verbunden. Der Lichtblitz kann dabei die Fasern in Blickrichtung des optischen Meßsystems beleuchten oder in umgekehrter Richtung, d.h. mit Gegenlicht.

Vorteilhaft ist es, die beiden Projektionsebenen, auf denen die Faser abgebildet oder erfaßt wird, räumlich so einzurichten, daß ihre Schnittlinie im wesentlichen parallel zur Transportrichtung der Faser verläuft. Dadurch wird erreicht, daß die Faser in beiden Projektionsebenen in einem günstigen, im wesentlichen gestreckten Zustand abgebildet wird. Durch den Transport der Faser mittels der Transportluft richtet sich die Faser vorteilhaft in Transportrichtung aus und ist wenigstens überwiegend gestreckt und wird auch so auf den Projektionsebenen darstellt. Zum Messen der Länge der Faser wird vorteilhaft die Projektion in einzelne Bildpunkte zerlegt und die beiden Projektionsebenen mit einem zweidimensionalen Koordinatensystem beschrieben, so daß die Abbildung der Projektion der Faser mittels des zweidimensionalen Koordinatensystems, das sich ebenfalls in der Projektionsebene befindet, die exakte Länge der Projektion der Faser, bzw. den Abstand der einzelnen Bildpunkte zueinander, dargestellt werden kann. Besonders vorteilhaft ist es dabei, die Projektion der Faser in möglichst viele Punkte zu zerlegen, wodurch eine besonders exakte Messung der Länge möglich ist. Vorteilhaft wird die Zerlegung in Bildpunkte für jede der beiden Projektionen der Faser durchgeführt. Besonders günstig ist es dabei, für beide Projektionen die gleiche Anzahl von Bildpunkten vorzusehen. Beispielsweise wird dies mittels zweier Zeilenkameras dadurch erreicht, daß beide jeweils zur selben Zeit die Faser optisch erfassen.

Besonders vorteilhaft ist es, wenn die Bildpunkte der Projektionen exakt den Punkten der wirklichen Faser zugeordnet werden, weil dadurch bezweckt wird, daß eine exakte Längenbestimmung der Faser erreicht wird. Durch eine gemeinsame Koordinatenachse beider Koordinatensysteme der Projektionen wird dies vorteilhaft einfach ermöglicht. Zum Bestimmen der wahren Länge der Faser werden den Koordinaten der projizierten Bildpunkte Zahlenwerte zugeordnet, die dann rechentechnisch verarbeitet werden können, um die Länge der Faser zu ermitteln. Dazu wird die in Anspruch 17 beschriebene Rechenvorschrift zur Verarbeitung der Zahlenwerte der Koordinaten der projizierten Bild-Punkte vorteilhaft verwendet.

Durch die Verwendung eines Meßsystems mit wenigstens einer Kamera, einer Vorrichtung zum Vereinzeln der Fasern, sowie mit einer Rechnereinheit wird vorteilhaft erreicht, daß das erfindungsgemäße Verfahren auf einfache Weise durchgeführt werden kann. Besonders vorteilhaft ist es dabei zum Vereinzeln der Fasern eine drehbare, mit Nadeln oder Zähnen besetzte Walze vorzusehen, weil diese besonders sicher und schonend die Fasern vereinzeln kann. Vorteilhaft wird ein Kanal zum Transportieren der Fasern hin zur Kamera eingesetzt, weil dadurch ein exaktes Positionieren einer vereinzelten Faser im Verhältnis zur Kamera bzw, dem optischen Meßsystem gewährleistet ist. Vorteilhaft besitzt das Meßsystem einen Sensor, der die Faser überwacht und z.B. im Bereich der Kamera zum Steuern der Vorrichtung eingesetzt werden kann. Um ein sicheres optisches Erfassen der Fasern zu ermöglichen, besitzt das Meßsystem eine Lampe zum Beleuchten der Fasern. Vorteilhafterweise ist sie als Blitzlicht oder Stroboskop ausgebildet. Günstigerweise ist dabei der Sensor über eine Steuerleitung mit dem Blitzlicht verbunden, um im richtigen Moment die Faser zu beleuchten. In weiterer vorteilhafter Ausgestaltung der Vorrichtung gemäß der vorliegenden Erfindung besitzt das Meßsystem einen Spiegel, der ein Abbild der zu vermessenden Faser in Richtung zur Kamera wirft, weil dadurch es vorteilhaft möglich ist, mit nur einer einzigen Kamera die beiden Projektionen der Faser zu erfassen.

Besonders vorteilhaft ist ein Sensor zum Erfassen der Geschwindigkeit der Faser, weil dadurch vorteilhaft Zeilenkameras zum Erstellen der Projektion der Faser verwendet werden können. Die Recheneinheit kann dadurch zusammen mit den Meßwerten der Zeilenkameras vorteilhaft die Projektion der Fasern ermitteln und in einem Koordinatensystem darstellen.

Durch ein weiteres erfinderisches Verfahren kann vorteilhaft die dicke einer Faser bestimmt werden. Dazu wird eine der Projektionen so weiterbearbeitet, daß zunächst in der Darstellung der Faser eine Mittellinie gebildet und dazu eine Senkrechte erzeugt wird. Damit werden die Schnittpunkte der Senkrechten mit den dargestellten Begrenzungslinien der Faser ermittelt. Deren Abstand zueinander ergibt ein Maß für die Dikke der Faser. Über die Länge der Faser werden mehrere dieser zur Mittellinie senkrechten Linien gebildet und auch dazugehörige Paare von Schnittpunkten. Ihre Anzahl richtet sich dabei nach der gewünschten Genauigkeit für die Aussage zur Faserdicke. Mit diesem erfinderischen Verfahren können vorteilhaft auch die Schwankungen der Dicke der Faser über ihre Länge ermittelt werden.

Im folgenden wird die Erfindung anhand von zeichnerischen Darstellungen beschrieben.

Es zeigen:

Figur 1     eine perspektivische Darstellung einer Faser sowie zwei aufeinander senkrecht stehende Projektionsebenen und die von der Faser durch eine senkrechte Projektion auf die beiden Ebenen jeweils erzeugte Linie;

Figur 2     eine erfindungsgemäße Vorrichtung mit einer Auflösewalze sowie einem optischen Meßsystem;

Figur 2a    das optische Meßsystem von Figur 2;

Figur 3     ein in die Ebene geklappte Darstellung der beiden Projektionen auf die beiden in Figur 2 dargestellten Ebenen;

Figur 4     Eine Vorrichtung zum Messen der Länge von Fasern, bei der die eine Projektion der Faser über einen Spiegel der Kamera dargestellt wird.

Figur 5     Eine Abbildung einer Faser mit einer Darstellung der Mittellinie zur Bestimmung der Faserdicke.

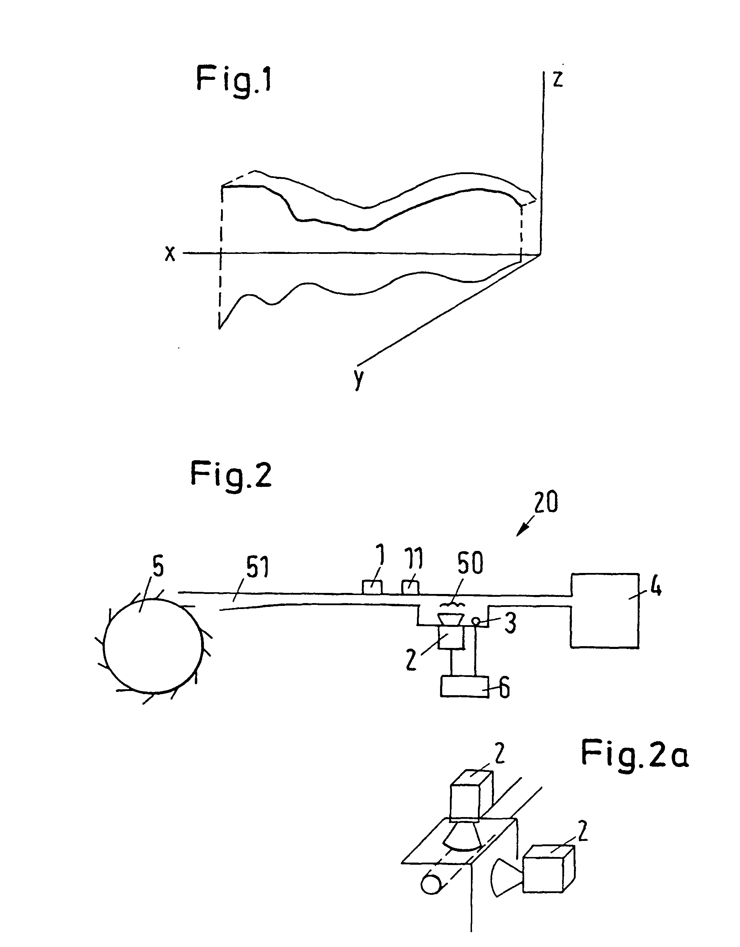

Figur 1 zeigt eine perspektivische Darstellung einer vereinzelten Faser 50, sowie ihre Projektionen auf zwei senkrecht zueinander stehende Projektionsebenen. Die eine ist gekennzeichnet durch die Koordinatenachsen xy, die zweite Projektionsebene durch die Koordinaten xz. Die beiden Projektionsebenen xz und xy stehen aufeinander senkrecht und haben die Achse x gemeinsam. Durch die beiden Projektionen ist die Faser geometrisch in zwei ebenen Kurven darstellbar, mit deren Hilfe eine exakte Längenbestimmung der Faser erfolgt.

Figur 2 zeigt eine Prinzipdarstellung einer erfindungsgemäßen Vorrichtung zur Durchführung des Verfahrens der vorliegenden Erfindung. Die Vorrichtung 20 zum Messen der Länge von vereinzelten Fasern 50 besitzt zwei Kameras 2 (vgl. Figur 2a), die zueinander senkrecht angeordnet sind. Die beiden Kameras 2 erfassen die Projektionsebenen xz und xy (vgl. Figur 1). Die Vorrichtung 20 besitzt eine Einrichtung 5 zum Auflösen von Fasermaterial in Einzelfasern 50. Die Einrichtung 5 zum Vereinzeln des Fasermaterials besteht aus einer bekannten Auflösewalze, die mit Zähnen besetzt ist und aus dem Fasermaterial Einzelfasern auskämmt. Diese gelangen dann über einen Kanal 51 in den Bereich der Kameras 2, wo das optische Erfassen der Projektionen der Faser 50 erfolgt. Im Kanal 51 ist ein Sensor 1 angeordnet, der eine einzelne Faser bei ihrem Vorbeiflug erkennt und die Vorrichtung 20 steuert, bzw. ein Steuersignal an eine nicht gezeigte Steuerung liefert. Das Steuern kann beispielsweise auch durch die Rechnereinheit 6 erfolgen. Sobald der Sensor 1 eine vereinzelte Faser 50 erkannt hat, wird zeitlich abgestimmt vom Blitzlicht 3 ein Lichtblitz erzeugt, so daß dieser die Faser 50 genau dann beleuchtet, wenn diese sich genau vor den Kameras 2 befindet. Die kurzzeitige Beleuchtung der Faser bewirkt, daß von den Kameras 2 ein scharfes Bild der Faser erkannt wird. Nach dem Vorbeiflug der Faser 50 an den Kameras 2 gelangt die Faser 50 in den Bereich eines Filters 4, wo sich die Faser niederschlägt. Für den Transport der Faser 50 durch den Kanal 51 sorgt eine nicht gezeigte Unterdruckvorrichtung, die die Luft im Kanal 51 in Richtung zum Filter 4 in Bewegung setzt. Die Kameras 2 sind elektronische Kameras, die Bilder liefern, die aus einzelnen Bildpunkten bestehen. Die von diesen Kameras 2 erzeugten Bilder können digitalisiert werden und dadurch rechentechnisch erfaßt und weiterverarbeitet werden. Dadurch ist es besonders einfach möglich, die von den Kameras 2 erkannten Projektionen in einzelne Meßpunkte zu zerlegen und diesen Koordinaten der jeweiligen Projektionsebene zuzuordnen. Diese Koordinaten können dann in der Rechnereinheit 6 weiterverarbeitet werden. Die Rechnereinheit 6 besitzt auch einen Steuerteil, der die Signale des Sensors 1 erfaßt und Steuersignale für das Blitzlicht 3 erzeugt.

Bei einem anderen Meßverfahren ist es auch denkbar, daß die Rechnereinheit 6 nur sehr kurzzeitig die Kameras 2 einschaltet, während die Faser 50 ständig beleuchtet ist. Auch dadurch ist es möglich, eine scharfe Abbildung der Faser 50 auf ihren Projektionsebenen zu erzielen.

Wird eine Zeilenkamera (nicht dargestellt) zum Erfassen der Projektion der Faser eingesetzt, wird die Geschwindigkeit der Faser ermittelt. Die Meßvorrichtung 20 besitzt dann einen Geschwindigkeitssensor 11 zum Erfassen der Geschwindigkeit der zu vermessenden Faser. Diese Geschwindigkeitsmessung kann vorteilhaft durch Messen der Geschwindigkeit der Transportluft erfolgen.

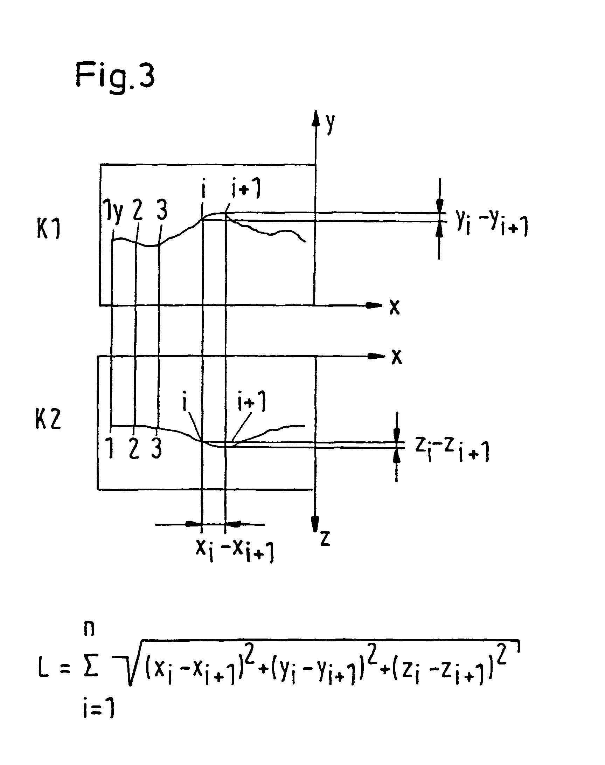

Bei Verwendung von Zeilenkameras erstellt die Rechnereinheit 6 direkt die Meßpunkte $x_i y_i$ und $x_i z_i$ (siehe unten), die dann direkt weiterverarbeitet werden können (vgl. Beschreibung Fig. 3).

Figur 3 erläutert graphisch das Verfahren zum Bestimmen der Länge der Faser. Die von der ersten Kamera erfaßte Projektion K1 der Faser ist oben dargestellt und durch das Koordinatensystem xy beschrieben. Die zweite Kamera erfaßt die Projektion K2 in der Ebene xz. Die Projektion der wirklichen Faser stellt sich als eine Linie dar, die für die Berechnung der Länge der Faser in einzelne Punkte ($x_i y_i$ in der einen Projektion und $x_i z_i$ in der anderen Projektion) zerlegt werden. Die Anzahl der Einzelpunkte ist davon abhängig, wie genau die Messung sein soll, denn je mehr Einzelpunkte der Projektionen vermessen werden, desto exakter ist die Länge der Faser bestimmbar: Die Menge der Einzelpunkte hängt von den technischen Möglichkeiten der Kameras und der Rechnereinheit ab. Der Meßpunkt 1y (vgl. Figur 3) zeigt den Anfang der Faser und besitzt in der Koordinatenachse x in beiden Projektionen denselben Wert, da die x-Achse eine gemeinsame Koordinatenachse beider Projektionen ist. Nachdem die Projektionen in eine endliche Anzahl von Einzelpunkten zerlegt worden ist (n-Punkte) wird diesen Punkten in der Rechnereinheit die Position im Koordinatensystem zugewiesen und das ganze nach folgender Rechenvorschrift weiterverarbeitet, so daß die exakte Länge der Faser ermittelt werden kann. Dazu wird folgende Formel benutzt, wobei L die Länge der wirklichen Faser ist:

$$L = \sum_{i=1}^{n} \sqrt{(x_i - x_{i+1})^2 + (y_i - y_{i+1})^2 + (z_i - z_{i+1})^2}$$

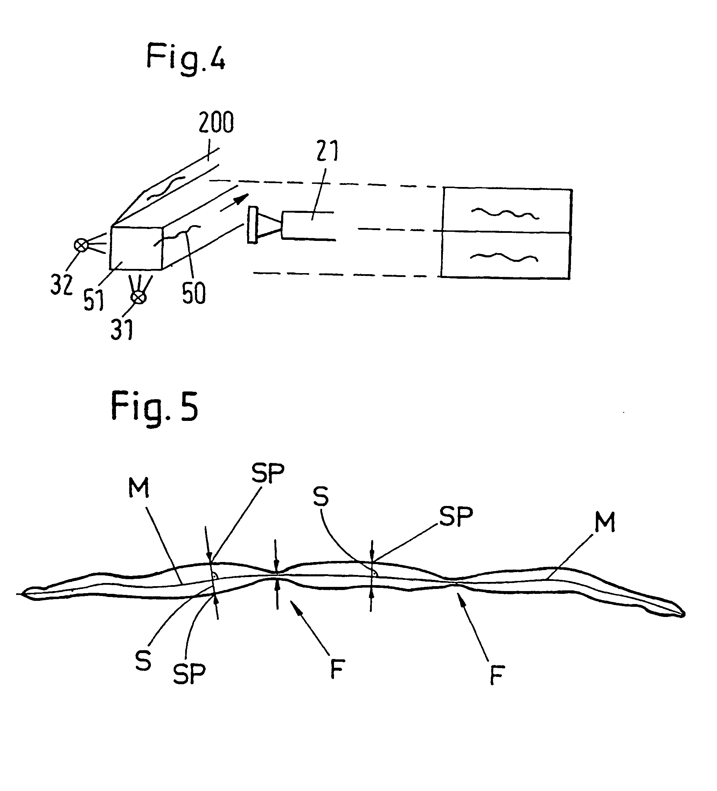

Figur 4 zeigt eine Prinzipdarstellung der Vorrichtung zum Messen der Länge von vereinzelten Fasern, bei der beide Projektionen durch eine Kamera 21 erfaßt werden. Dies erfolgt dadurch, daß die eine Projektion von einem Spiegel 200 erfaßt und reflektiert wird und das Bild in Richtung Kamera 21 geworfen wird. Das Blitzlicht 31 beleuchtet die Faser 50 von unten und wirft das Bild in Richtung Kamera, während das Blitzlicht 32 die Faser 50 im Gegenlicht zur Kamera 2 beleuchtet. Rechts von der Kamera 2 sind die beiden Projektionen, so wie sie die Kamera erfaßt, dargestellt. In der Rechnereinheit wird das von der Kamera 2 erfaßte Bild in zwei unabhängige Bilder zerlegt und wie oben beschrieben die Länge der Faser bestimmt. Der Kanal 51 ist ein geschlossener Kanal, der im Bereich der Kamera 2 durchsichtig, z.B. aus Glas, ausgebildet ist.

Mit Figur 5 wird das Verfahren zur Bestimmung der Faserdicke erläutert. Die Abbildung zeigt beispielhaft eine Baumwollfaser. Das ursprünglich durch eine Kamera erfaßt Bild, bei dem sich die Faser zunächst einheitlich, z. B. schwarz, darstellt, wurde mittels eines Bildverarbeitungsprogramms, z. B. OPTIMAS von der Firma BioScan, Inc., Edmonds, USA, so weiterverarbeitet, daß nur noch die Begrenzungslinie der Faser dargestellt ist. Ebenfalls mittels eines Bildverarbeitungsprogramms wird die Mittellinie M ermittelt und in die Darstellung der Faser eingefügt. An beliebig vielen Stellen werden anschließend Senkrechten S zur Mittellinie M gebildet, die ihrerseits die Begrenzungslinie der Faser in den Schnittpunkten SP schneiden. Der Abstand der beiden Schnittpunkte SP zu einander ergibt dann ein Maß für die Dicke der Faser. Eine Baumwollfaser besitzt einen im wesentlichen ovalen Querschnitt und die Faser ist in sich über ihre Länge verdreht. Die Stellen F zeigen die Faser an der Stelle Ihres geringsten Querschnitts. Die ovale Querschnittsform der Faser besitzt praktisch ein festes Verhältnis zwischen der Länge und Breite des Querschnitts der Faser. Die Verdrehung der Faser hat in der Darstellung zur Folge, daß ihre größte Ausdehnung sich immer zwischen zwei der Stellen F befindet. Dadurch kann die Faserdicke recht genau bestimmt werden.

Die Auflösung der Darstellung sollte so groß gewählt werden, daß die Senkrechte S in eine genügende Anzahl Bild-Pixel unterteilt werden kann, um eine ausreichende Genauigkeit der Messung zu erhalten. So sollten z.B. im Bereich, wo die Senkrechte S durch den größten Querschnitt der Faser geht, ca. 100 Bild-Pixel vorhanden sein.

**Patentansprüche**

1.   Verfahren zum Messen der Länge von Fasern (50), wobei die Fasern (50) als vereinzelte Fasern (50) an einem optischen Meßsystem vorbeigeführt werden, **dadurch gekennzeichnet, daß** die vereinzelte Faser (50) in zwei Projektionsebenen (K1, K2) optisch erfaßt wird und in jeder Projektionsebene (K1; K2) die Projektion der Faser erfaßt wird, daß die Projektion der Faser (50) in einzelne Bildpunkte zerlegt wird, daß ferner zum Erfassen der Länge der Abstände der einzelnen Bildpunkte der Projektion ein zweidimensionales Koordinatensystem zugeordnet wird und daraus die wahre Länge der Faser (50) ermittelt wird.

2.   Verfahren nach Anspruch 1, **dadurch gekennzeichnet, daß** die beiden Projektionsebenen (K1, K2) im wesentlichen aufeinander senkrecht stehen.

3.   Verfahren nach Anspruch 1 oder 2, **dadurch gekennzeichnet, daß** das optische Meßsystem die Projektion der Faser (50) gleichzeitig in beiden Projektionsebenen (K1, K2) erfaßt.

4.   Verfahren nach einem oder mehreren der Ansprüche 1 bis 3, **dadurch gekennzeichnet, daß** die Faser (50) an einer linienförmige Bilder erfassenden Kamera (2) vorbeigeführt wird.

5.   Verfahren nach einem oder mehreren der Ansprüche 1 bis 3, **dadurch gekennzeichnet, daß** die Faser (50) nur über einen kurzen Zeitraum optisch erfaßt wird, so daß die Bewegung der Faser (50) keine wesentliche Veränderung der Lage der Faser in ihrer Projektion während des optischen Erfassens bewirkt.

6.   Verfahren nach einem oder mehreren der Ansprüche 1 bis 5, **dadurch gekennzeichnet, daß** die Faser (50) während der Messung durch einen zeitlich kurzen Lichtblitz beleuchtet wird.

**7.** Verfahren nach einem oder mehreren der Ansprüche 1 bis 6, **dadurch gekennzeichnet, daß** die Faser (50) beim Eintritt in das Meßsystem von einem Sensor (1) erfaßt wird und mit Hilfe von dessen Signal das Meßsystem gesteuert wird.

**8.** Verfahren nach einem oder mehreren der Ansprüche 1 bis 7, **dadurch gekennzeichnet, daß** das Erfassen der Faser (50) während eines kurzen Zeitraumes erfolgt, wobei dazu das optische Meßsystem nur kurzzeitig aktiviert ist.

**9.** Verfahren nach einem oder mehreren der Ansprüche 6 bis 8, **dadurch gekennzeichnet, daß** der Sensor (1) den Lichtblitz steuert.

**10.** Verfahren nach einem oder mehreren der Ansprüche 7 bis 9, **dadurch gekennzeichnet, daß** der Sensor (1) den Beginn der kurzzeitigen Aktivierung des optischen Meßsystems steuert.

**11.** Verfahren nach einem oder mehreren der Ansprüche 1 bis 10, **dadurch gekennzeichnet, daß** die Schnittlinie der beiden Projektionsebenen (K1, K2) im wesentlichen parallel zur Transportrichtung der Faser (50) verläuft.

**12.** Verfahren nach Anspruch 11, **dadurch gekennzeichnet, daß** die Zerlegung in Bildpunkte für jede der beiden Projektionen (K1, K2) der Faser (50) durchgeführt wird.

**13.** Verfahren nach Anspruch 11 oder 12, **dadurch gekennzeichnet, daß** einem wirklichen Punkt der Faser (50) je ein Bildpunkt in jeder Projektion (K1, K2) entspricht und einem ersten wirklichen Punkt der Faser (50) zwei projizierte Bild-Punkte (i) zugeordnet sind und einem zweiten wirklichen Punkt zwei entsprechende projizierte Bild-Punkte und für die projizierten Bild-Punkte (i) die Koordinaten (x, y, z) des zweidimensionalen Koordinatensystem ihrer jeweiligen Projektionsebene (K1, K2) erfaßt werden.

**14.** Verfahren nach Anspruch 13, **dadurch gekennzeichnet, daß** beiden Koordinatensystemen (K1, K2) eine Koordinatenachse gemeinsam ist.

**15.** Verfahren nach Anspruch 14, **dadurch gekennzeichnet, daß** den erfaßten Koordinaten Zahlenwerte zugeordnet werden, mit deren Hilfe der Abstand zweier wirklicher Punkte der Faser (50) ausgedrückt wird, mit Hilfe der Differenzen der Zahlenwerte der Koordinaten der beiden Projektionen (K1, K2) und somit die wirkliche Länge der Faser (50) ermittelt wird.

**16.** Verfahren nach Anspruch 15, **dadurch gekennzeichnet, daß** dazu folgende Rechenvorschrift zugrundegelegt wird:

$$L = \sum_{i=1}^{n} \sqrt{\left(x_i - x_{i+1}\right)^2 + \left(y_i - y_{i+1}\right)^2 + \left(z_i - z_{i+1}\right)^2}$$

**17.** Vorrichtung zum Messen der Länge von vereinzelten Fasern aus einem Faserverband mit einem optischen Meßsystem zur Durchführung des Verfahrens nach einem oder mehreren der Ansprüche 1 bis 17, **dadurch gekennzeichnet, daß** das Meßsystem wenigstens eine Kamera (2) besitzt, dem Meßsystem eine Einrichtung (5) zum Vereinzeln von Fasern (50) sowie eine Einrichtung (51) zum Transport der Fasern (50) zugeordnet ist, das von der Kamera (2) erfaßte Bild einer Faser von einer Rechnereinheit (6) in Zahlenwerte umgesetzt wird und damit die Länge der Faser (50) errechnet wird.

**18.** Vorrichtung nach Anspruch 17, **dadurch gekennzeichnet, daß** die Einrichtung (50) zum Vereinzeln der Fasern eine drehbare mit Nadeln oder Zähnen besetzte Walze (5) ist.

**19.** Vorrichtung nach Anspruch 17 oder 18, **dadurch gekennzeichnet, daß** das Meßsystem einen Kanal (51) zum Transportieren der Fasern (50), an der Kamera (2) vorbei, besitzt.

**20.** Vorrichtung nach einem oder mehreren der Ansprüche 17 bis 19, **dadurch gekennzeichnet, daß** das Meßsystem einen Sensor (1) zum Erfassen einer Faser (50) besitzt.

**21.** Vorrichtung nach einem oder mehreren der Ansprüche 17 bis 20, **dadurch gekennzeichnet, daß** das Meßsystem eine Lampe (3, 31, 32) zum Beleuchten der Faser besitzt.

**22.** Vorrichtung nach Anspruch 21, **dadurch gekennzeichnet, daß** die Lampe ein Blitzlicht ist.

**23.** Vorrichtung nach Anspruch 24, **dadurch gekennzeichnet, daß** der Sensor (1) mit einer Steuerleitung mit dem Blitzlicht (3, 31, 32) verbunden ist.

**24.** Vorrichtung nach einem oder mehreren der Ansprüche 17 bis 23, **dadurch gekennzeichnet, daß** das Meßsystem einen Spiegel (200) besitzt, der das Bild der Faser (50) zur Kamera (2) projiziert.

**25.** Vorrichtung nach Anspruch 24; **dadurch gekennzeichnet, daß** mittels des Spiegels (200) die eine den beiden Projektionen dargestellt wird, wobei diese der Kamera (2) neben der anderen Projektion dargeboten wird, so daß beide in einem Bild nebeneinander dargestellt werden.

**26.** Vorrichtung nach einem oder mehreren der Ansprüche 22 bis 25, **dadurch gekennzeichnet, daß** zwei Blitzlichter vorgesehen sind, die die Faser von verschiedenen Seiten beleuchten.

**27.** Vorrichtung nach einem oder mehreren der Ansprüche 17 bis 26, **dadurch gekennzeichnet, daß** das Meßsystem einen Geschwindigkeitssensor zum Erfassen der Geschwindigkeit der Faser besitzt.

**Claims**

**1.** A method for measuring the length of fibres (50), whereby the fibres (50) are conducted past an optical measuring system as individual fibres (50), <u>**characterised in that**</u> the individual fibres (50) are optically assessed in two projection planes (K1, K2), and in each projection plane (K1, K2) the projection of the fibres is acquired, that the projection of the fibres (50) is decomposed into individual image points or pixels, that, in addition, to acquire the length of the distances between the individual image points of the projection a two-dimensional co-ordinate system is assigned, and from this the true length of the fibres (50) is determined.

**2.** The method according to Claim 1, **characterised in that** the two projection planes (K1, K2) stand essentially perpendicular to one another.

**3.** The method according to Claim 1 or 2, **characterised in that** the optical measuring system acquires the projection of the fibres (50) simultaneously in both projection planes (K1, K2).

**4.** The method according to one of more of Claims 1 to 3, **characterised in that** the fibres (50) are conducted past a camera (2) which acquires linear images.

**5.** The method according to one of more of Claims 1 to 3, **characterised in that** the fibres (50) are optically acquired only over a short period of time, so that the movement of the fibres (50) does not incur any substantial change in the position of the fibres in their projection during the optical acquisition.

**6.** The method according to one of more of Claims 1 to 5, **characterised in that** the fibres (50) are illuminated during the measurement by a temporally short flash of light.

**7.** The method according to one of more of Claims 1 to 6, **characterised in that** the fibres (50) are acquired on entering the measuring system by a sensor (1) and the measuring system is controlled with the aid of this signal.

**8.** The method according to one of more of Claims 1 to 7, **characterised in that** the acquisition of the fibres (50) is effected during a short space of time, whereby the optical measuring system is only activated for a short time for this purpose.

**9.** The method according to one of more of Claims 1 to 8, **characterised in that** the sensor (1) controls the light flash.

**10.** The method according to one of more of Claims 7 to 9, **characterised in that** the sensor (1) controls the start of the short activation of the optical measuring system.

**11.** The method according to one of more of Claims 1 to 10, **characterised in that** the intersection line of the two projections (K1, K2) runs essentially parallel to the direction of conveyance of the fibres (50).

**12.** The method according to Claim 11, **characterised in that** the decomposition into image points or pixels is carried out for each of the projections (K1, K2) of the fibres.

**13.** The method according to Claim 11 or 12, **characterised in that** the one image point or pixel in each projection (K1, K2) corresponds to one real point of the fibres (50), and two projected image points or pixels (i) are allocated to one real point of the fibres (50), and two corresponding projected image points or pixels are allocated to a first true point of the fibres (50), and two corresponding projected image points or pixels (i) to a second true point, and for the projected image points or pixels (i) the co-ordinates (x, y, z) of the two-dimensional co-ordinate system of their individual projection plane (K1, K2) are acquired in each case.

**14.** The method according to Claim 13, **characterised in that** one co-ordinate axis is common to both co-ordinate systems (K1, K2).

**15.** The method according to Claim 14, **characterised in that** numerical values are allocated to the co-ordinates acquired, with the aid of which the distance between two true points of the fibres (50) is expressed, and with the aid of the differences in the numerical values of the co-ordinates of the two projections (K1, K2) are determined, and therefore the true length of the fibres (50).

**16.** The method according to Claim 15, **characterised in that** the following formula is taken as the basis:

$$L = \sum_{i=1}^{n} \sqrt{(x_i - x_{i+1})^2 + (y_i - y_{i+1})^2 + (z_i - z_{i+1})^2}$$

**17.** A device for measuring the length of individual fibres from a fibre structure with an optical measuring system for carrying out the method according to one or more of Claims 1 to 17, **characterised in that** the measuring system has at least one camera (2), that a device (5) is allocated to the measuring system for the individualisation of the fibres (50), as well as a device (51) for conveying the fibres (50), the image of a fibre which is acquired by the camera (2) is converted by a computer unit (6) into numerical values, and the length of the fibres (50) is thereby calculated.

**18.** The device according to Claim 17, **characterised in that** the device (50) for the individualisation of the fibres is a rotatable roller (5) fitted with needles or teeth.

**19.** The device according to Claim 17 or 18, **characterised in that** the measuring system has a channel (51) for the conveying of the fibres (50) past the camera (2).

**20.** The device according to one or more of Claims 17 to 19, **characterised in that** the measuring system has a sensor (1) for the acquisition of a fibre (50).

**21.** The device according to one or more of Claims 17 to 19, **characterised in that** the measuring system has a lamp (3, 31, 32) for the lighting of the fibres.

**22.** The device according to Claim 21, **characterised in that** the lamp is a flashing light.

**23.** The device according to Claim 24, **characterised in that** the sensor (1) is connected by a control line to the flashing light (3, 31, 32).

**24.** The device according to one or more of Claims 17 to 23, **characterised in that** the measuring system has a mirror (200) which projects the image of the fibres (50) to the camera (2).

**25.** The device according to Claim 24, **characterised in that**, by means of the mirror (200) one of the two projections is represented, whereby this is offered to the camera (2) next to the other projection, so that both are represented next to one another in one image.

**26.** The device according to one or more of Claims 22 to 25, **characterised in that** two flashing lights are provided for, which illuminate the fibres from different sides.

**27.** The device according to one or more of Claims 17 to 26, **characterised in that** the measuring system has a speed sensor to acquire the speed of the fibres.

**Revendications**

**1.** Procédé de mesure de la longueur de fibres (50), dans lequel on fait passer les fibres (50) sous forme de fibres individualisées (50) devant un système de mesure optique, **caractérisé en ce que** la fibre individualisée (50) est enregistrée de manière optique dans deux plans de projection (K1, K2) et que la projection de la fibre est enregistrée dans chaque plan de projection (K1, K2), que la projection de la fibre (50) est décomposée en différents points d'image, qu'en outre, pour enregistrer la longueur des écarts entre les différents points d'image, un système de coordonnées bidimensionnel est associé à la projection et qu'on détermine à partir de cela la véritable longueur de la fibre (50).

**2.** Procédé selon la revendication 1, **caractérisé en ce que** les deux plans de projection (K1, K2) sont orientés sensiblement perpendiculairement l'un par rapport à l'autre.

**3.** Procédé selon la revendication 1 ou 2, **caractérisé en ce que** le système de mesure optique enregistre la projection de la fibre (50) simultanément dans les deux plans de projection (K1, K2).

**4.** Procédé selon une ou plusieurs des revendications 1 à 3, **caractérisé en ce qu'**on fait passer la fibre (50) devant une caméra (2) enregistrant des images de forme linéaire.

**5.** Procédé selon une ou plusieurs des revendications 1 à 3, **caractérisé en ce que** la fibre (50) n'est enregistrée de manière optique que pendant une brève période, de sorte que le mouvement de la fibre (50) ne provoque pas de changement sensible de la position de la fibre dans sa projection pendant l'enregistrement optique.

**6.** Procédé selon une ou plusieurs des revendications 1 à 5, **caractérisé en ce que** la fibre (50) est éclairée pendant la mesure par un éclair lumineux de brève durée.

**7.** Procédé selon une ou plusieurs des revendications 1 à 6, **caractérisé en ce que** la fibre (50), à son entrée dans le système de mesure, est enregistrée par un capteur (1) et est que le système de mesure est contrôlé à l'aide du signal de ce capteur.

**8.** Procédé selon une ou plusieurs des revendications 1 à 7, **caractérisé en ce que** l'enregistrement de la fibre (50) se fait pendant une brève durée, le système de mesure optique n'étant activé que brièvement pour ce faire.

**9.** Procédé selon une ou plusieurs des revendications 6 à 8, **caractérisé en ce que** le capteur (1) contrôle l'éclair lumineux.

**10.** Procédé selon une ou plusieurs des revendications 7 à 9, **caractérisé en ce que** le capteur (1) contrôle le début de la brève activation du système de mesure optique.

**11.** Procédé selon une ou plusieurs des revendications 1 à 10, **caractérisé en ce que** la ligne d'intersection des deux plans de projection (K1, K2) s'étend sensiblement parallèlement au sens de transport de la fibre (50).

**12.** Procédé selon la revendication 11, **caractérisé en ce que** la décomposition en points d'image est réalisée pour chacune des deux projections (K1, K2) de la fibre (50).

**13.** Procédé selon la revendication 11 ou 12, **caractérisé en ce qu'**à chaque point réel de la fibre (50) correspond à chaque fois un point d'image de chaque projection (K1, K2) et qu'à un premier point réel de la fibre (50) sont associés deux points d'image projetés (i) et qu'à un deuxième point réel sont associés deux points d'image projetés correspondants et que, pour les points d'image projetés (i), les coordonnées (x, y, z) du système de coordonnées bidimensionnel de leur plan de projection respectif (K1, K2) sont enregistrées.

**14.** Procédé selon la revendication 13, **caractérisé en ce que** les deux systèmes de coordonnées (K1, K2) ont un axe de coordonnées en commun.

**15.** Procédé selon la revendication 14, **caractérisé en ce que** sont associées aux coordonnées enregistrées des valeurs numériques qui permettent d'exprimer l'écart entre deux points réels de la fibre (50) à l'aide des différences de valeurs numériques des coordonnées des deux projections (K1, K2) et de déterminer ainsi la longueur réelle des fibres (50).

**16.** Procédé selon la revendication 15, **caractérisé en ce que** la prescription de calcul suivante est prise comme base :

$$L = \sum_{i=1}^{n} \sqrt{(x_i - x_{i+1})^2 + (y_i - y_{i+1})^2 + (z_i - z_{i+1})^2}$$

**17.** Procédé de mesure de la longueur de fibres individualisées provenant d'une bande de fibres à l'aide d'un système de mesure optique pour la réalisation du procédé suivant une ou plusieurs des revendications 1 à 17, **caractérisé en ce que** le système de mesure comporte au moins une caméra (2), qu'au système de mesure sont associés un dispositif (5) d'individualisation des fibres (50) ainsi qu'un dispositif (51) de transport des fibres (50), que l'image d'une fibre enregistrée par la caméra (2) est convertie par une unité de calcul (6) en valeurs numériques et que la longueur de la fibre (50) est ainsi calculée.

**18.** Dispositif selon la revendication 17, **caractérisé en ce que** le dispositif (50) d'individualisation des fibres est un cylindre rotatif (5) équipé d'aiguilles ou de dents.

**19.** Dispositif selon la revendication 17 ou 18, **caractérisé en ce que** le système de mesure comporte un canal (51) pour le transport des fibres devant la caméra (2).

**20.** Dispositif selon une ou plusieurs des revendications 17 à 19, **caractérisé en ce que** le système de mesure comporte un capteur (1) pour l'enregistrement d'une fibre (50).

**21.** Dispositif selon une ou plusieurs des revendications 17 à 20, **caractérisé en ce que** le système de mesure comporte une lampe (3, 31, 32) pour l'éclairage de la fibre.

**22.** Dispositif selon la revendication 21, **caractérisé en ce que** la lampe est une lampe à éclairs.

**23.** Dispositif selon la revendication 22, **caractérisé en ce que** le capteur (1) est relié par une ligne de commande à la lampe à éclairs (3, 31, 32).

**24.** Dispositif selon une ou plusieurs des revendications 17 à 23, **caractérisé en ce que** le système de mesure comporte un miroir (200) qui projette l'image de la fibre (50) vers la caméra (2).

**25.** Dispositif selon la revendication 24, **caractérisé en ce qu'**au moyen du miroir (200), une des deux projections est représentée, celle-ci étant présentée à la caméra (2) près de l'autre projection, de sorte que les deux sont représentées l'une près de l'autre dans une image.

**26.** Dispositif selon une ou plusieurs des revendications 22 à 25, **caractérisé en ce qu'**il est prévu deux lampes à éclairs qui éclairent la fibre depuis différents côtés.

**27.** Dispositif selon une ou plusieurs des revendications 17 à 26, **caractérisé en ce que** le système de mesure comporte un capteur de vitesse pour enregistrer la vitesse de la fibre.

Fig.1

Fig.2

Fig.2a

Fig.3

$$L = \sum_{i=1}^{n} \sqrt{(x_i - x_{i+1})^2 + (y_i - y_{i+1})^2 + (z_i - z_{i+1})^2}$$

Fig.4

Fig. 5